# EUROPEAN PATENT APPLICATION

(11) **EP 4 773 232 A1**
(43) Date of publication of application: **08.07.2026**
(21) Application number: 25820443.7
(22) Date of filing: 02.06.2025
(51) Int. Cl.: H01M 4/36, H01M 4/587, H01M 4/38, H01M 4/583, H01M 4/62, H01M 10/052, H01M 4/02

(54) **NEGATIVE ELECTRODE ACTIVE MATERIAL, NEGATIVE ELECTRODE FOR LITHIUM SECONDARY BATTERY INCLUDING SAME, AND LITHIUM SECONDARY BATTERY**

(30) Priority: 05.06.2024 KR 20240073588; 30.05.2025 KR 20250070896
(71) Applicant: LG Energy Solution, Ltd., Seoul 07335 (KR)
(72) Inventor: PARK, Junhyoung, Daejeon 34122 (KR); LEE, Jaewook, Daejeon 34122 (KR); KWON, Yohan, Daejeon 34122 (KR)
(74) Representative: Hoffmann Eitle
(86) International application number: PCT/KR2025/095373
(87) International publication number: WO 2025/254499

(57) **Abstract**

The present invention relates to a negative electrode active material, a negative electrode for a lithium secondary battery, including same, and a lithium secondary battery. The negative electrode active material includes a silicon-based active material; and graphite, wherein the graphite includes natural graphite and artificial graphite, an absolute value of a ratio of a difference in average particle diameter (D50) size of the natural graphite with respect to the artificial graphite is 10% or less, and an absolute value of a ratio of a difference in average particle diameter (D50) size of the silicon-based active material with respect to the artificial graphite is 40% or less.

## Description

### CROSS-REFERENCE TO RELATED APPLICATIONS

This application claims priority to and the benefit of Korean Patent Application No. 10-2024-0073588 filed on June 05, 2024, the disclosures of which are incorporated herein by reference in their entirety.

### FIELD

The present application relates to a negative electrode active material, a negative electrode for a lithium secondary battery including the same, and a lithium secondary battery.

### BACKGROUND

Demands for the use of alternative energy or clean energy are increasing due to the rapid increase in the use of fossil fuels, and as a part of this trend, the most actively studied field is a field of electricity generation and electricity storage using an electrochemical reaction.

Currently, representative examples of an electrochemical device using such electrochemical energy include a secondary battery, and the usage areas thereof are increasing more and more.

Recently, with the rapid spread of electronic devices using batteries, such as not only mobile phones, notebook-sized computers, and electric vehicles, but also power tools and cleaners, the demand for small and lightweight secondary batteries having relatively high capacity and/or high output is rapidly increasing. In particular, lithium secondary batteries are lightweight and have high energy density, and thus have attracted attention as driving power sources for electronic devices. Accordingly, research and development efforts to improve the performance of lithium secondary batteries have been actively conducted.

The lithium secondary battery generates electric energy by oxidation and reduction reactions during intercalation and deintercalation of lithium ions at a positive electrode and a negative electrode in a state in which an organic electrolytic solution or polymer electrolytic solution is filled between the positive electrode and the negative electrode, which are composed of active materials capable of intercalating and deintercalating lithium ions.

In general, a secondary battery is composed of a positive electrode, a negative electrode, an electrolyte, and a separator. The negative electrode includes a negative electrode active material for intercalating and deintercalating lithium ions from the positive electrode, and as the negative electrode active material, a material having high discharge capacity may be used.

A metal oxide such as LiCoO₂, LiMnO₂, LiMn₂O₄, or LiNiO₂ is used as a positive electrode active material constituting a positive electrode of a lithium secondary battery, and a material such as metal lithium, a carbon-based material such as graphite or activated carbon, or silicon oxide (SiOx) is used as a negative electrode active material constituting a negative electrode. Among the negative electrode active materials, metal lithium was mainly used initially, but as the charge and discharge cycles proceeds, lithium atoms grow on the surface of the metal lithium to damage a separator, thereby damaging a battery, so that recently, a carbon-based material is usually used.

Although graphite is usually used as a negative electrode active material for a lithium secondary battery, it is difficult to increase the capacity of the lithium secondary battery because graphite has a small capacity per unit mass of 372 mAh/g. Accordingly, in order to increase the capacity of a lithium secondary battery, negative electrode materials such as silicon, tin and oxides thereof have been developed as non-carbon-based negative electrode materials having higher energy density than graphite. However, although these non-carbon-based negative electrode materials have a large capacity, these materials have a problem in that the amount of lithium consumed is large and the irreversible capacity loss is large during the initial charging and discharging due to the low initial efficiency.

As the demand for high-density energy batteries has been recently increased, studies have been actively conducted on a method of increasing the capacity using a silicon-based compound such as Si/C or SiOx together, which has a capacity 10-fold or more higher than that of a graphite-based material as a negative electrode active material, but a silicon-based compound, which is a high-capacity material, has a higher capacity than graphite used in the related art, but has a problem in that the volume rapidly expands in the charging process to disconnect the conductive path, resulting in deterioration in battery characteristics.
Thus, in order to secure the appropriate capacity and stability of the negative electrode, methods of manufacturing an electrode by using graphite and simultaneously mixing graphite with a silicon-based active material having a high specific capacity in an appropriate ratio have been attempted.

However, even though a method of using a silicon-based active material in combination with graphite in the negative electrode is used, the difference in particle size between a graphite material and a silicon-based active material causes a problem in which the dispersibility of each active material in the electrode deteriorates, and accordingly, the slurry aggregation, and the like occurs, so that a problem in that the service life performance rather deteriorates occurs.

Therefore, even when a silicon-based active material is used as a negative electrode active material to improve capacity performance, there is a need for research to improve the dispersibility of the above-described negative electrode active material.

### Related Art

[Patent document 1] Japanese Patent Application Laid-Open No. 2009-080971

### SUMMARY

### Technical Problem to be Solved

The present inventors have conducted research into improving the dispersibility of a mixed negative electrode active material of the above-described silicon-based active material and graphite, have found that the dispersibility of the active material in the electrode can be improved particularly when the average particle diameters (D50) of the graphite material and silicon-based active material used as the active material of the negative electrode are adjusted, and have revealed that the optimal battery performance can be implemented because the clusters of the silicon-based active material can be prevented, thereby leading to the present disclosure.

### Technical Means for Solving the Technical Problem

An exemplary embodiment of the present disclosure provides a negative electrode active material including: a silicon-based active material; and graphite, in which the graphite includes natural graphite and artificial graphite, an absolute value of a ratio of a difference in an average particle diameter (D50) between the natural graphite and the artificial graphite with respect to the average particle diameter of artificial graphite is 10% or less, and an absolute value of a ratio of a difference in an average particle diameter (D50) between the silicon-based active material and the artificial graphite with respect to the average particle diameter of artificial graphite is 40% or less.

Another exemplary embodiment of the present disclosure provides a negative electrode for a lithium secondary battery, including: a negative electrode current collector layer; and a negative electrode active material layer provided on one surface or both surfaces of the negative electrode current collector layer, in which the negative electrode active material layer includes the above-described negative electrode active material.

Yet another exemplary embodiment of the present disclosure provides a lithium secondary battery including: a positive electrode; the above-described negative electrode for lithium secondary battery; a separator between the positive electrode and the negative electrode; and an electrolyte.

### Technical Effects

The negative electrode active material according to the exemplary embodiment of the present disclosure is characterized in that an absolute value of a ratio of a difference in an average particle diameter (D50) between the natural graphite and the artificial graphite with respect to the average particle diameter of artificial graphite is 10% or less, and an absolute value of a ratio of a difference in an average particle diameter (D50) between the silicon-based active material and the artificial graphite with respect to the average particle diameter of artificial graphite is 40% or less. The dispersibility of the negative electrode active material in the negative electrode slurry can be improved by adjusting the average particle diameter (D50) of the negative electrode active material included in the negative electrode as described above, and the negative electrode thus manufactured has improved dispersibility of two or more types of active materials in the electrode, thereby suppressing local volume expansion and stress concentration phenomena and improving the service life characteristics of the electrode.

Specifically, the average particle diameters of the silicon-based active material and the artificial graphite are limited as described above. The reason for this adjustment is, the silicon-based active material has a smaller particle diameter than the graphite-based active material, and when the negative electrode slurry is mixed and the electrode is coated with the mixture in a state in which there is a difference in particle diameter, a phenomenon in which the silicon-based active material, which has a smaller particle diameter than the graphite-based active material, locally forms clusters occurs. The clusters of the silicon-based active material undergo a larger volume change during the charge/discharge process than the surrounding graphite-based active material, which acts as a factor in accelerating the deterioration of the electrode, so that the difference in average particle diameter between the silicon-based active materials and the artificial graphite as described above needs to be adjusted.

Similarly, by adjusting the average particle diameter of natural graphite and artificial graphite in the graphite-based active material as described in the present application, the active material in the electrode is uniformly dispersed, so that local stress generation, reaction acceleration, and deterioration during the operation process of a battery can be prevented, and an electrode in which the active material is uniformly dispersed can be manufactured.

That is, the above-described problem can be solved by adjusting the difference in average particle diameter between the silicon-based active material and artificial graphite and between the artificial graphite and natural graphite included in the graphite, rather than simply adjusting the average particle diameters of the silicon-based active material and graphite or adjusting the average particle diameters of the artificial graphite and natural graphite included in the graphite alone.

### BRIEF DESCRIPTION OF THE DRAWINGS

FIG. 1 is a view illustrating the stacking structure of a negative electrode for a lithium secondary battery according to an exemplary embodiment of the present application.
FIG. 2 is a view illustrating the stacking structure of a lithium secondary battery according to an exemplary embodiment of the present application.

Description of reference numbers:
10 negative electrode current collector layer
20 negative electrode active material layer
30 separator
40 positive electrode active material layer
50 positive electrode current collector layer
100 negative electrode for lithium secondary battery
200 positive electrode for lithium secondary battery

### DETAILED DESCRIPTION

Hereinafter, the present disclosure will be described in more detail in order to help the understanding of the present disclosure.

The terms or words used in the present specification and the claims should not be construed as being limited to typical or dictionary meanings, and should be construed as meanings and concepts conforming to the technical spirit of the present disclosure on the basis of the principle that an inventor can appropriately define concepts of the terms in order to describe his or her own invention in the best way.

The terms used in the present specification are used only to describe exemplary embodiments, and are not intended to limit the present disclosure. Singular expressions include plural expressions unless the context clearly indicates otherwise.

In the present disclosure, the term "comprise", "include", or "have" is intended to indicate the presence of the characteristic, number, step, constituent element, or any combination thereof implemented, and should be understood to mean that the presence or addition possibility of one or more other characteristics or numbers, steps, constituent elements, or any combination thereof is not precluded.

Further, a case where a part such as a layer is present "above" or "on" another part includes not only a case where the part is present "immediately above" another part, but also a case where still another part is present therebetween. Conversely, the case where a part is present "immediately above" another part means that no other part is present therebetween. In addition, a case of being "above" or "on" a reference part means being located above or below the reference part, and does not necessarily mean being located "above" or "on" in the opposite direction of gravity.

In the present specification, the "specific surface area" is measured by the BET method, and may be specifically measured by degassing an object to be measured at 130°C for 2 hours using a BET measuring apparatus (BEL-SORP-mini, Nippon Bell), and performing N₂ adsorption/desorption at 77 K. That is, the BET specific surface area in the present specification may mean a specific surface area of the particles themselves measured by the measurement method.

In the present specification, the average length or diameter of a conductive material may be measured using SEM or TEM.

In the present specification, "Dn" means the particle size distribution, and means the particle diameter at the n% point of the cumulative distribution of the number of particles according to the particle diameter. That is, D50 is the particle diameter (average particle diameter) at the 50% point of the cumulative distribution of the number of particles according to the particle diameter, D90 is the particle diameter at the 90% point of the cumulative distribution of the number of particles according to the particle diameter, and D10 is the particle diameter at the 10% point of the cumulative distribution of the number of particles according to the particle diameter. Meanwhile, the average particle diameter may be measured using a laser diffraction method. Specifically, after a powder to be measured is dispersed in a dispersion medium, a particle size distribution is calculated by introducing the resulting dispersion into a commercially available laser diffraction particle size measurement device (for example, Microtrac S3500) to measure the difference in diffraction pattern according to the particle size when particles pass through the laser beam.

In the present specification, the "Dn" of the active material in the negative electrode can be measured by confirming the size of the active material included in the negative electrode after the final charge/discharge after manufacturing the negative electrode, and specifically, in the case of the average particle diameter (D50), when the cross-section of the negative electrode active material layer is continuously cut after manufacturing the negative electrode and the final charge/discharge, this can be measured in the electrode cross-section. At this time, a three-dimensional imaging technique can be utilized, and specifically, a three-dimensional image can be obtained by stacking images of cross-sections obtained continuously, and through this, a comparison of the average particle diameters between active materials in the battery after charge/discharge is possible.

In an exemplary embodiment of the present application, the particle size or particle diameter may mean the average diameter or representative diameter of each particle forming a metal powder.

In the present specification, the fact that a polymer includes a monomer as a monomer unit means that the monomer participates in a polymerization reaction, and thus is included as a repeating unit in the polymer. In the present specification, when the polymer includes a monomer, it is interpreted to be the same as when the polymer includes a monomer as a monomer unit.

In the present specification, the 'polymer' is understood to be used in a broad sense, including a copolymer, unless otherwise specified as a 'homopolymer.'

In the present specification, a weight average molecular weight (Mw) and a number average molecular weight (Mn) are polystyrene-conversion molecular weights measured by gel permeation chromatography (GPC) using a monodisperse polystyrene polymer (standard sample) with various degrees of polymerization commercially available for the measurement of the molecular weight as a standard material. In the present specification, the molecular weight means a weight average molecular weight unless otherwise described.

Hereinafter, the present disclosure will be described in detail with reference to drawings, such that a person with ordinary skill in the art to which the present disclosure pertains can easily carry out the present disclosure. However, the present disclosure can be implemented in various different forms, and is not limited to the following description.

An exemplary embodiment of the present disclosure provides a negative electrode active material including: a silicon-based active material; and graphite, in which the graphite includes natural graphite and artificial graphite, an absolute value of a ratio of a difference in an average particle diameter (D50) between the natural graphite and the artificial graphite with respect to the average particle diameter of artificial graphite is 10% or less, and an absolute value of a ratio of a difference in an average particle diameter (D50) between the silicon-based active material and the artificial graphite with respect to the average particle diameter of artificial graphite is 40% or less.

The negative electrode according to the present application includes natural graphite, artificial graphite, and a silicon-based active material. Artificial graphite has a relatively slow rate but high structural stability, and natural graphite has a relatively large volume change compared to artificial graphite but has a high rate, so the two graphites have different properties. When configuring a graphite electrode by utilizing these properties, the two graphites are blended and used to complement the difference in properties, and in particular, the present application configures an electrode by using a silicon-based active material together to supplement the relatively low specific capacity of graphite.

When one type of active material is used, there is no major problem, but when several types of active materials are used simultaneously, differences in particle size occur, and materials with small particle sizes form clusters within the electrode, causing local unevenness. At this time, the volume change of the Si-based active material forming the cluster is accompanied by a large volume expansion compared to the surrounding graphite-based active material, which causes local stress and structural changes within the electrode, as well as loss of conductivity, resulting in increased internal resistance of the electrode and decreased lifespan.

The present application recognizes the above problems and, in response to the negative electrode applying artificial graphite, natural graphite and silicon-based active materials simultaneously, is characterized in that the particle size relationship of natural graphite and silicon-based active materials is controlled based on artificial graphite, respectively. In other words, it has the characteristic of being able to control the occurrence of local unevenness according to the mutual relationship between the particle sizes of each active material.

In the present application, the negative electrode active material includes a silicon-based active material and graphite.

In the present application, the silicon-based active material may include one or more selected from the group consisting of Si, SiOx (0<x<2), Si/C, and a Si alloy.

In the present application, when the silicon-based active material is Si, the content of Si in the silicon-based active material may be 98% or more, 99% or more, specifically 100%.

In the present application, when the silicon-based active material is the remainder excluding Si, the content of Si based on 100 parts by weight of the silicon-based active material may include 40 parts by weight or more and 80 parts by weight or less. That is, the content of the Si element itself in the silicon-based active material may satisfy the above range.

In the present application, the Si/C may be expressed as a silicon carbon composite.

In the present specification, the silicon carbon composite is a composite of Si and C, and is distinguished from silicon carbide which is denoted as SiC. Since the silicon carbide does not electrochemically react with lithium, all performance parameters such as service life may be measured at zero.

The silicon carbon composite may be a composite of silicon, graphite, and the like, and may also form a structure in which a core resulting from compositing of silicon and graphite and the like is surrounded by graphene, amorphous carbon or the like. In the silicon carbon composite, the silicon may be nano-silicon. For example, the nano-silicon may be silicon in a range from 1 nm to 999 nm.

In the present application, the graphite includes natural graphite and artificial graphite.

In the present application, an absolute value of a ratio of a difference in an average particle diameter (D50) between the natural graphite and the artificial graphite with respect to the average particle diameter of artificial graphite is 10% or less.

In another exemplary embodiment, an absolute value of a ratio of a difference in an average particle diameter (D50) between the natural graphite and the artificial graphite with respect to the average particle diameter of artificial graphite is 10% or less, preferably 9% or less, and more preferably 8.5% or less, and may be 1% or more, or 3% or more.

In the present application, an absolute value of a ratio of a difference in an average particle diameter (D50) between the silicon-based active material and the artificial graphite with respect to the average particle diameter of artificial graphite is 40% or less.

In still another exemplary embodiment, an absolute value of a ratio of a difference in an average particle diameter (D50) between the silicon-based active material and the artificial graphite with respect to the average particle diameter of artificial graphite is 40% or less, preferably 38% or less, and more preferably 35% or less, and may be 1% or more, 5% or more, 10% or more, or 20% or more.

The present application is characterized in that the average particle diameters of the silicon-based active material and the artificial graphite, as well as the artificial graphite and natural graphite included in the graphite are adjusted as described above. As the above range is satisfied, the three types of active materials included in the negative electrode slurry may exhibit a uniform dispersibility without forming each cluster. Accordingly, local reaction acceleration, stress concentration, and electrode deterioration due to the different reactivity with lithium ions may be ameliorated, and accordingly, the effect of improving the service life of a manufactured electrode may be exhibited.

Specifically, the fact that the difference in particle diameter between the silicon-based active material and artificial graphite is limited as above serves to prevent the following phenomenon: since the silicon-based active material has a smaller particle diameter than the graphite material, when a slurry is mixed and an electrode is coated with the mixture in a state in which there is a difference in particle diameter as described above, a phenomenon in which a silicon-based active material having a small particle diameter locally forms clusters appears, and the clusters of the silicon-based active material undergo a larger volume change during the charge/discharge process than the surrounding graphite material, so that it becomes a main factor for accelerating deterioration of the electrode.

At this time, the particle size of the silicon-based active material is not compared with that of the entire graphite, but is compared with that of artificial graphite among graphite, which has a similar meaning to comparing it with the particle size of the entire graphite.

In the present application, the absolute value of a ratio of a difference in the average particle diameter (D50) size between the artificial graphite and the natural graphite with respect to the average particle diameter of artificial graphite can be calculated as |{(A-B) / A}| x 100%, when the average particle diameter of the artificial graphite is defined as A and the average particle diameter of the natural graphite is defined as B.

In the present application, the absolute value of a ratio of a difference in the average particle diameter (D50) size between the artificial graphite and the silicon-based active material with respect to the average particle diameter of artificial graphite can be calculated as |{(A-C) / A}| x 100%, when the average particle diameter of the artificial graphite is defined as A and the average particle diameter of the silicon-based active material is defined as C.

That is, when the average particle diameter of the silicon-based active material or the natural graphite is larger or smaller within a certain range based on the artificial graphite and is included within a certain ratio, the aforementioned effect can be achieved.

In the present application, the silicon-based active material may have an average particle diameter (D50) of 1 µm or more and 10 µm or less.

In another exemplary embodiment, the average particle diameter (D50) of the silicon-based active material may satisfy a range of 1 µm or more and 10 µm or less, 2 µm or more and 10 µm or less, or 4 µm or more and 10 µm or less.

In the present application, the graphite may have an average particle diameter (D50) of 5 µm or more and 20 µm or less.

In another exemplary embodiment, the graphite may have an average particle diameter (D50) of 5 µm or more and 20 µm or less, preferably 6 µm or more and 18 µm or less, and more preferably 7 µm or more and 17 µm or less.

In the present application, the natural graphite may have an average particle diameter (D50) of 5 µm or more and 20 µm or less, and the artificial graphite may have an average particle diameter (D50) of 5 µm or more and 20 µm or less.

In another exemplary embodiment, the natural graphite may have an average particle diameter (D50) of 5 µm or more and 20 µm or less, preferably 7 µm or more and 17 µm or less, and more preferably 9 µm or more and 15 µm or less.

In still another exemplary embodiment, the artificial graphite may have an average particle diameter (D50) of 5 µm or more and 20 µm or less, preferably 8 µm or more and 18 µm or less, and more preferably 10 µm or more and 16 µm or less.

In the present application, the average particle diameter of the graphite may mean the average particle diameter (D50) relative to the overall average of the artificial graphite and natural graphite included in the graphite. At this time, the present application did not compare the particle sizes of the silicon-based active material and the entire graphite, but compared them with the particle sizes of artificial graphite among graphite, but this has a similar meaning to comparing them with the particle sizes of the entire graphite.

In the present application, the average particle diameters of the silicon-based active material and the graphite may be used without limitation as long as the above-described difference in average particle diameters is satisfied, but in particular, when a silicon-based active material and graphite having average particle diameters in the range described above are used, the silicon-based active material may be prevented from forming local clusters in the electrode, and thus it is possible to suppress negative reactions such as local stress generation, acceleration of reactions with lithium ions, and rapid deterioration of the active material due to the silicon-based active material undergoing a larger volume change during the charge/discharge process than the surrounding graphite material.

In the present application, the reason for limiting the difference in particle diameter between natural graphite and artificial graphite to a certain level or less is the same as that described above, and when the difference in particle diameter occurs, the active material is not uniformly dispersed in the electrode, so that during the operation process of a battery, local stress, acceleration of reactions, deterioration, and the like may occur, and accordingly, in order to manufacture a uniform electrode, all active materials need to have a difference in particle diameter in the range of the present application.

In an exemplary embodiment of the present application, the weight ratio of the silicon-based active material to graphite based on 100 parts by weight of the negative electrode active material may be 5:95 to 40:60.

In another exemplary embodiment, the weight ratio of the silicon-based active material to graphite based on 100 parts by weight of the negative electrode active material may satisfy 5:95 to 40:60, preferably 7:93 to 35:75, and more preferably 10:90 to 30:70.

In the present application, the ratio of the silicon-based active material and the graphite in the negative electrode active material is characterized by satisfying the above range. Although silicon-based active materials are known to be materials having excellent capacity characteristics, due to the volume expansion during charging and discharging, when a high content is applied, the service life performance may deteriorate due to the volume expansion, and when a low content is included, it may be difficult to improve the capacity characteristics, so that the present application has the content described above, and thus, has improved service life characteristics along with the capacity characteristics.

In the present application, the weight ratio of the artificial graphite to the natural graphite based on 100 parts by weight of the graphite may be 60:40 to 80:20.

In another exemplary embodiment, the weight ratio of the artificial graphite to the natural graphite may satisfy 60:40 to 80:20, preferably 65:35 to 78:22, and more preferably 70:30 to 75:25 based on 100 parts by weight of the graphite.

Graphite may include artificial graphite and natural graphite, and it is confirmed that artificial graphite has excellent cell characteristics compared to natural graphite, so that the use of natural graphite is reduced and the amount of artificial graphite used is increased. However, from the viewpoint of cost, artificial graphite has a problem in that coke needs to be calcined and graphitized, resulting in high processing costs, and accordingly, when the above range is satisfied, it has the characteristic capable of improving cell characteristics along with the cost problem.

In the present application, for the negative electrode active material, artificial graphite, natural graphite, and the silicon-based active material may be included at a smaller weight ratio in this order.

In the present application, based on the average particle diameter (D50) of an artificial graphite having the highest weight ratio in the negative electrode active material, the average particle diameter (D50) relationship of artificial graphite > natural graphite > the silicon-based active material may be satisfied.

In the present application, based on the average particle diameter (D50) of an artificial graphite having the highest weight ratio in the negative electrode active material, the average particle diameter (D50) relationship of natural graphite > artificial graphite > the silicon-based active material may be satisfied.

In the present application, based on the average particle diameter (D50) of an artificial graphite having the highest weight ratio in the negative electrode active material, the average particle diameter (D50) relationship of artificial graphite > natural graphite > the silicon-based active material may be satisfied, the average particle diameter of the natural graphite may be in a difference range of 10% or less based on the average particle diameter of the artificial graphite, and the average particle diameter of the silicon-based active material may be smaller than the average particle diameter of the artificial graphite by a range of 20% or more and 40% or less.

In the present application, based on the average particle diameter (D50) of an artificial graphite having the highest weight ratio in the negative electrode active material, the average particle diameter (D50) relationship of natural graphite > artificial graphite > the silicon-based active material may be satisfied, the average particle diameter of the natural graphite may be in a difference range of 10% or less based on the average particle diameter of the artificial graphite, and the average particle diameter of the silicon-based active material may be smaller than the average particle diameter of the artificial graphite by a range of 20% or more and 40% or less.

That is, as long as the average particle diameter values of the artificial graphite and the natural graphite satisfy the above-described difference value, the average particle diameter of the artificial graphite may be larger or smaller than that of the natural graphite.

In the present application, a negative electrode composition including the negative electrode active material is provided.

In the present application, the negative electrode composition may further include, in addition to the silicon-based active material and graphite, a negative electrode conductive material; and a negative electrode binder.

That is, in the present application, as a negative electrode composition including the negative electrode active material, the negative electrode composition may further include a negative electrode conductive material; and a negative electrode binder.

In this case, the negative electrode composition and the negative electrode slurry are different from each other, and when the negative electrode composition includes a slurry solvent, such a negative electrode composition including the slurry solvent may be referred to as a negative electrode slurry.

In the present application, the negative electrode active material may be included in an amount of 90 parts by weight or more based on 100 parts by weight of the negative electrode composition.

In another exemplary embodiment, the negative electrode active material may be included in an amount of 90 parts by weight or more, 91 parts by weight or more, or 92 parts by weight or more, and may be 95 parts by weight or less, based on 100 parts by weight of the negative electrode composition.

As the negative electrode active material is included in the above range, the negative electrode has the characteristics capable of securing the capacity characteristics and energy density of the negative electrode.

In the related art, it was common to use only a graphite-based compound as a negative electrode active material, but recently, as the demand for a high-capacity battery has increased, attempts to mix and use a silicon-based active material have been increased in order to increase the capacity. However, in the case of the silicon-based active material, even though characteristics of the silicon-based active material itself are adjusted as described above, the volume rapidly expands in the process of charging and discharging, so that a problem in that a conductive path formed in the negative electrode active material layer is impaired may occur in some cases.

Therefore, in an exemplary embodiment of the present application, the negative electrode conductive material may include one or more selected from the group consisting of a dotted conductive material, a planar conductive material, and a linear conductive material.

In an exemplary embodiment of the present application, the dotted conductive material may be used to enhance the conductivity of the negative electrode, and means a dot or sphere-shaped conductive material having conductivity without inducing a chemical change. Specifically, the dotted conductive material may be at least one selected from the group consisting of natural graphite, artificial graphite, carbon black, acetylene black, Ketjen black, channel black, furnace black, lamp black, thermal black, a conductive fiber, fluorocarbon, an aluminum powder, a nickel powder, zinc oxide, potassium titanate, titanium oxide and a polyphenylene derivative, and may preferably include carbon black in terms of implementing high conductivity and being excellent in dispersibility.

In an exemplary embodiment of the present application, the dotted conductive material may have a BET specific surface area of 40 m²/g or more and 70 m²/g or less, preferably 45 m²/g or more and 65 m²/g or less, and more preferably 50 m²/g or more and 60 m²/g or less.

In an exemplary embodiment of the present application, the functional group content (volatile matter) of the dotted conductive material may satisfy 0.01% or more and 1% or less, preferably 0.01% or more and 0.3% or less, and more preferably 0.01% or more and 0.1% or less.

In particular, when the functional group content of the dotted conductive material satisfies the above range, a functional group present on the surface of the dotted conductive material is present, so that when water is used as a solvent, the dotted conductive material may be smoothly dispersed in the solvent. In particular, in the present disclosure, as a specific silicon-based active material is used, it is possible to reduce the functional group content of the dotted conductive material, and accordingly, the present disclosure has an effect excellent in improving dispersibility.

In an exemplary embodiment of the present application, it is characterized in that the dotted conductive material having a functional group content in the above range is included along with the silicon-based active material, and the functional group content may be adjusted according to the degree to which the dotted conductive material is heat-treated.

In an exemplary embodiment of the present application, the dotted conductive material may have a particle diameter of 10 nm to 100 nm, preferably 20 nm to 90 nm, and more preferably 20 nm to 60 nm.

In an exemplary embodiment of the present application, the conductive material may include a planar conductive material.

The planar conductive material may serve to improve conductivity by increasing the surface contact between silicon particles in the negative electrode and simultaneously suppress the disconnection of the conductive path due to the volume expansion. The planar conductive material may be expressed as a plate-like conductive material or a bulk conductive material.

In an exemplary embodiment of the present application, the planar conductive material may include at least one selected from the group consisting of plate-like graphite, graphene, graphene oxide, and graphite flake, and may be preferably plate-like graphite.

In an exemplary embodiment of the present application, the planar conductive material may have an average particle diameter (D50) of 2 µm to 7 µm, specifically 3 µm to 6 µm, and more specifically 3.5 µm to 5 µm. When the average particle diameter satisfies the above range, sufficient particle size facilitates dispersion without causing an excessive increase in viscosity of the negative electrode slurry. Therefore, the dispersion effect is excellent when particles are dispersed using the same equipment and time.

In an exemplary embodiment of the present application, provided is a negative electrode composition in which the planar conductive material has a D10 of 0.5 µm or more and 2.0 µm or less, a D50 of 2.5 µm or more and 3.5 µm or less, and a D90 of 6.5 µm or more and 15.0 µm or less.

In an exemplary embodiment of the present application, as the planar conductive material, it is possible to use a high specific surface area planar conductive material having a high BET specific surface area; or a low specific surface area planar conductive material.

In an exemplary embodiment of the present application, as the planar conductive material, a high specific surface area planar conductive material; or a low specific surface area planar conductive material may be used without limitation, but in particular, the planar conductive material according to the present application may be affected by the dispersion effect to some extent in the electrode performance, so that it may be particularly desirable to use a low specific surface area planar conductive material that does not cause a problem in dispersion.

In an exemplary embodiment of the present application, the planar conductive material may have a BET specific surface area of 0.25 m²/g or more.

In another exemplary embodiment, the planar conductive material may have a BET specific surface area of 1 m²/g or more and 500 m²/g or less, preferably 5 m²/g or more and 300 m²/g or less, and more preferably 5 m²/g or more and 250 m²/g or less.

As the planar conductive material according to the present application, it is possible to use a high specific surface area planar conductive material; or a low specific surface area planar conductive material.

In still another exemplary embodiment, the planar conductive material is a high specific surface area planar conductive material, and the BET specific surface area may satisfy a range of 50 m²/g or more and 500 m²/g or less, preferably 80 m²/g or more and 300 m²/g or less, and more preferably 100 m²/g or more and 300 m²/g or less.

In yet another exemplary embodiment, the planar conductive material is a low specific surface area planar conductive material, and the BET specific surface area may satisfy a range of 1 m²/g or more and 40 m²/g or less, preferably 5 m²/g or more and 30 m²/g or less, and more preferably 5 m²/g or more and 25 m²/g or less.

As other conductive materials, there may be a linear conductive material such as carbon nanotubes. The carbon nanotubes may be bundle type carbon nanotubes. The bundle type carbon nanotubes may include a plurality of carbon nanotube units. Specifically, the term 'bundle type' used herein refers to, unless otherwise specified, a secondary shape in the form of a bundle or rope in which a plurality of carbon nanotube units are aligned side by side in such an orientation that longitudinal axes of the carbon nanotube units are substantially the same, or are entangled. In the carbon nanotube unit, a graphite sheet has a cylindrical shape with a nano-sized diameter and has an sp2 bond structure. In this case, the carbon nanotube unit may exhibit characteristics of a conductor or semiconductor depending on a structure and an angle at which the graphite sheet is rolled. The bundle type carbon nanotubes may be uniformly dispersed during the preparation of a negative electrode compared to entangled type carbon nanotubes, and the conductivity of the negative electrode may be improved by smoothly forming a conductive network in the negative electrode.

In an exemplary embodiment of the present application, provided is a negative electrode composition, in which the negative electrode conductive material is included in an amount of 0.1 parts by weight or more and 5 parts by weight or less, based on 100 parts by weight of the negative electrode composition.

In another exemplary embodiment, the negative electrode conductive material may be included in an amount of 0.1 parts by weight or more and 5 parts by weight or less, preferably 0.2 parts by weight or more and 3 parts by weight or less, more preferably 0.2 parts by weight or more and 2 parts by weight or less, and most preferably 0.2 parts by weight or more and 1 part by weight or less, based on 100 parts by weight of the negative electrode composition.

In particular, in an exemplary embodiment of the present application, as the negative electrode conductive material includes a linear conductive material and each satisfies the composition and ratio, the negative electrode composition has a feature in which output characteristics at a high C-rate are excellent because the service life characteristics of the existing lithium secondary battery are not greatly affected and points where the battery can be charged and discharged are increased.

The negative electrode conductive material according to the present application has a completely different configuration from a positive electrode conductive material applied to the positive electrode. That is, the negative electrode conductive material according to the present application serves to capture a contact point between silicon-based active materials in which the volume expansion of the electrode is very large due to charging and discharging, and the positive electrode conductive material serves to impart partial conductivity while playing a buffer role as a cushioning role when rollpressed, and the configuration and role thereof are completely different from those of the negative electrode conductive material of the present disclosure.

In an exemplary embodiment of the present application, the planar conductive material used as the above-described negative electrode conductive material has a structure and a role different from those of a carbon-based active material generally used as a negative electrode active material. Specifically, the carbon-based active material used as the negative electrode active material may be artificial graphite or natural graphite, and means a material that is processed into a spherical or dot shape and used in order to facilitate the storage and release of lithium ions.

In contrast, the planar conductive material used as the negative electrode conductive material is a material having a planar or plate-like shape, and may be expressed as plate-like graphite. That is, the planar conductive material is a material included to maintain the conductive path in the negative electrode active material layer, and means a material for securing a conductive path in a planar form in the negative electrode active material layer rather than a role of storing and releasing lithium.

That is, in the present application, the fact that plate-like graphite is used as a conductive material means that the plate-like graphite is processed into a planar or plate-like shape and used as a material that secures a conductive path rather than a role of storing or releasing lithium. In this case, the negative electrode active material included together has high capacity characteristics for lithium storage and release, and plays a role capable of storing and releasing all lithium ions transmitted from the positive electrode.

In contrast, in the present application, the fact that a carbon-based active material is used as an active material means that the carbon-based active material is processed into a dot or spherical shape and used as a material that serves to store or release lithium.

That is, in an exemplary embodiment of the present application, artificial graphite or natural graphite, which is a carbon-based active material is in a dot form, and the BET specific surface area thereof may satisfy a range of 0.1 m²/g or more and 4.5 m²/g or less. In addition, plate-like graphite, which is a planar conductive material, is in a planar form, and may have a BET specific surface area of 5 m²/g or more.

In an exemplary embodiment of the present application, the negative electrode binder may include at least one selected from the group consisting of a polyvinylidene fluoride-hexafluoropropylene copolymer (PVDF-co-HFP), polyvinylidene fluoride, polyacrylonitrile, polymethylmethacrylate, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, polyacrylic acid, an ethylene-propylene-diene monomer (EPDM), a sulfonated EPDM, styrene butadiene rubber (SBR), fluorine rubber, polyacrylic acid and a material in which the hydrogen thereof is substituted with Li, Na, Ca, or the like, and may also include various copolymers thereof.

The negative electrode binder according to an exemplary embodiment of the present application plays a role of supporting the active material and the conductive material in order to prevent the distortion and structural deformation of the negative electrode structure in the volume expansion and relaxation of the silicon-based active material, and when the above role is satisfied, all general binders can be applied, specifically, a water-based binder can be used, and more specifically, a PAM-based binder can be used.

In an exemplary embodiment of the present application, the negative electrode binder may be included in an amount of 1 part by weight or more and 10 parts by weight or less, preferably 2 parts by weight or more and 9 parts by weight or less, and more preferably 2 parts by weight or more and 8 parts by weight or less, based on 100 parts by weight of the negative electrode composition.

In an exemplary embodiment of the present application, provided is a negative electrode for a lithium secondary battery, including: a negative electrode current collector layer; and a negative electrode active material layer including the negative electrode active material according to the present application formed on one surface or both surfaces of the negative electrode current collector layer.

In an exemplary embodiment of the present application, provided is a negative electrode for a lithium secondary battery, including: a negative electrode current collector layer; and a negative electrode active material layer including the negative electrode composition according to the present application or a cured product thereof formed on one surface or both surfaces of the negative electrode current collector layer.

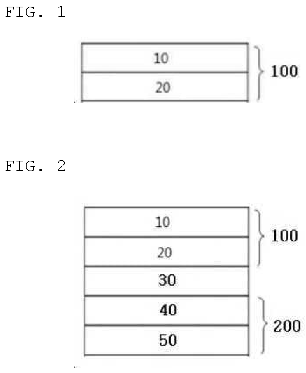

FIG. 1 is a view illustrating the stacking structure of a negative electrode for a lithium secondary battery according to an exemplary embodiment of the present application. Specifically, it is possible to confirm a negative electrode 100 for a lithium secondary battery, including a negative electrode active material layer 20 on one surface of a negative electrode current collector layer 10, and FIG. 1 illustrates the negative electrode active material layer formed on one surface, but the negative electrode active material layer may be included on both surfaces of the negative electrode current collector layer.

In an exemplary embodiment of the present application, the negative electrode for a lithium secondary battery may be formed by applying a negative electrode slurry including the negative electrode composition onto one surface or both surfaces of the negative electrode current collector layer and drying the negative electrode slurry.

In this case, the negative electrode slurry may include: the above-described negative electrode composition; and a slurry solvent.

In an exemplary embodiment of the present application, a solid content of the negative electrode slurry may satisfy 5% or more and 40% or less.

In another exemplary embodiment, the solid content of the negative electrode slurry may satisfy a range of 5% or more and 40% or less, preferably 7% or more and 35% or less, and more preferably 10% or more and 30% or less.

The solid content of the negative electrode slurry may mean the content of the negative electrode composition contained in the negative electrode slurry, and may mean the content of the negative electrode composition based on 100 parts by weight of the negative electrode slurry.

When the solid content of the negative electrode slurry satisfies the above range, the present disclosure has a feature capable of efficiently forming a negative electrode active material layer by minimizing the particle aggregation phenomenon of the negative electrode composition because the viscosity is suitable during the formation of the negative electrode active material layer.

In an exemplary embodiment of the present application, the slurry solvent can be used without limitation as long as the slurry solvent can dissolve a negative electrode composition, and specifically, water or NMP may be used.

In an exemplary embodiment of the present application, the negative electrode current collector layer generally has a thickness of 1 µm to 100 µm. The negative electrode current collector layer is not particularly limited as long as the negative electrode current collector layer has high conductivity without causing a chemical change to the battery, and for example, it is possible to use copper, stainless steel, aluminum, nickel, titanium, fired carbon, a material in which the surface of copper or stainless steel is surface-treated with carbon, nickel, titanium, silver, and the like, an aluminum-cadmium alloy, and the like. In addition, the negative electrode current collector layer may also increase the bonding strength of a negative electrode active material by forming fine irregularities on the surface thereof, and the negative electrode current collector layer may be used in various forms such as a film, a sheet, a foil, a net, a porous body, a foam body, and a non-woven fabric body.

In an exemplary embodiment of the present application, provided is a negative electrode for a lithium secondary battery, in which the negative electrode current collector layer has a thickness of 1 µm or more and 100 µm or less, and the negative electrode active material layer has a thickness of 5 µm or more and 500 µm or less.

However, the thickness may be variously modified depending on the type and use of the negative electrode used, and is not limited thereto.

In an exemplary embodiment of the present application, the porosity of the negative electrode active material layer may satisfy a range of 10% or more and 60% or less.

In another exemplary embodiment, the porosity of the negative electrode active material layer may satisfy a range of 10% or more and 60% or less, preferably 20% or more and 50% or less, and more preferably 30% or more and 45% or less.

The porosity varies depending on the composition and content of the silicon-based active material and graphite; the conductive material; and the binder, which are included in the negative electrode active material layer, and in particular, as the silicon-based active material and graphite; and the conductive material according to the present application are included in a specific composition and content, the above range is satisfied, and accordingly, it is characterized in that electrical conductivity and resistance in the electrode have appropriate ranges.

In an exemplary embodiment of the present application, provided is a lithium secondary battery including: a positive electrode; the negative electrode for a lithium secondary battery according to the present application; a separator between the positive electrode and the negative electrode; and an electrolyte.

In the present application, the negative electrode active material layer may further include a negative electrode conductive material; and a negative electrode binder.

In the present application, the negative electrode active material may be included in an amount of 90 parts by weight or more based on 100 parts by weight of the composition included in the negative electrode active material layer.

In the present application, the negative electrode conductive material may be included in an amount of 0.1 parts by weight or more and 5 parts by weight or less, based on 100 parts by weight of the composition included in the negative electrode active material layer, and the negative electrode binder may be included in an amount of 1 part by weight or more and 10 parts by weight or less, based on 100 parts by weight of the composition included in the negative electrode active material layer.

In this case, the composition included in the negative electrode active material layer may be the above-described negative electrode composition.

FIG. 2 is a view illustrating the stacking structure of a lithium secondary battery according to an exemplary embodiment of the present application. Specifically, it is possible to confirm a negative electrode 100 for a lithium secondary battery, which includes a negative electrode active material layer 20 on one surface of a negative electrode current collector layer 10 and to confirm a positive electrode 200 for a lithium secondary battery, which includes a positive electrode active material layer 40 on one surface of a positive electrode current collector layer 50, and it is shown that the negative electrode 100 for a lithium secondary battery and the positive electrode 200 for a lithium secondary battery are formed in a structure in which the electrodes are stacked with a separator 30 disposed therebetween.

The secondary battery according to an exemplary embodiment of the present specification may particularly include the above-described negative electrode for a lithium secondary battery. Specifically, the secondary battery may include a negative electrode, a positive electrode, a separator between the positive electrode and the negative electrode, and an electrolyte, and the negative electrode is the same as the above-described negative electrode. Since the negative electrode has been described in detail, a specific description thereof will be omitted.

The positive electrode may include a positive electrode current collector and a positive electrode active material layer formed on the positive electrode current collector and including the positive electrode active material.

In the positive electrode, the positive electrode current collector is not particularly limited as long as the positive electrode current collector has conductivity without causing a chemical change in the battery, and for example, it is possible to use stainless steel, aluminum, nickel, titanium, fired carbon, or aluminum or stainless steel of which the surface is treated with carbon, nickel, titanium, silver, and the like. Further, the positive electrode current collector may typically have a thickness of 3 to 500 µm, and the adhesion of the positive electrode active material may also be enhanced by forming fine irregularities on the surface of the current collector. For example, the positive electrode current collector layer may be used in various forms such as a film, a sheet, a foil, a net, a porous body, a foam body, and a non-woven fabric body.

The positive electrode active material may be a typically used positive electrode active material. Specifically, the positive electrode active material includes: a layered compound such as lithium cobalt oxide (LiCoO₂) and lithium nickel oxide (LiNiO₂) or a compound substituted with one or more transition metals; a lithium iron oxide such as LiFe₃O₄; a lithium manganese oxide such as chemical formula Li_{1+c1}Mn_{2-c1}O₄ (0≤c1≤0.33), LiMnO₃, LiMn₂O₃, and LiMnO₂; a lithium copper oxide (Li₂CuO₂); a vanadium oxide such as LiV₃O₈, V₂O₅, and Cu₂V₂O₇; a Ni site type lithium nickel oxide expressed as chemical formula LiNi_{1-c2}M_{c2}O₂ (here, M is at least any one selected from the group consisting of Co, Mn, Al, Cu, Fe, Mg, B and Ga, and c2 satisfies 0.01≤c2≤0.3); a lithium manganese composite oxide expressed as chemical formula LiMn_{2-c3}M_{c3}O₂ (here, M is at least any one selected from the group consisting of Co, Ni, Fe, Cr, Zn and Ta, and c3 satisfies 0.01≤c3≤0.1) or Li₂Mn₃MO₈ (here, M is at least any one selected from the group consisting of Fe, Co, Ni, Cu and Zn.); LiMn₂O₄ in which Li of the chemical formula is partially substituted with an alkaline earth metal ion, and the like, but is not limited thereto. The positive electrode may be Li-metal.

The positive electrode active material layer may include a positive electrode conductive material and a positive electrode binder together with the above-described positive electrode active material.

In this case, the positive electrode conductive material is used to impart conductivity to the electrode, and can be used without particular limitation as long as the positive electrode conductive material has electron conductivity without causing a chemical change to a battery to be constituted. Specific examples thereof include graphite such as natural graphite or artificial graphite; a carbon-based material such as carbon black, acetylene black, Ketjen black, channel black, furnace black, lamp black, thermal black, and carbon fiber; metal powder or metal fiber such as copper, nickel, aluminum, and silver; a conductive whisker such as zinc oxide and potassium titanate; a conductive metal oxide such as titanium oxide; or a conductive polymer such as a polyphenylene derivative, and any one thereof or a mixture of two or more thereof may be used.

In addition, the positive electrode binder serves to improve the bonding between positive electrode active material particles and the adhesion between the positive electrode active material and the positive electrode current collector. Specific examples thereof may include polyvinylidene fluoride (PVDF), a polyvinylidene fluoridehexamethyl fluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated EPDM, styrene-butadiene rubber (SBR), fluorine rubber, or various copolymers thereof, and any one thereof or a mixture of two or more thereof may be used.

The separator separates the negative electrode and the positive electrode and provides a passage for movement of lithium ions, and can be used without particular limitation as long as the separator is typically used as a separator in a secondary battery, and in particular, a separator having an excellent ability to retain moisture of an electrolyte as well as low resistance to ion movement in the electrolyte is preferable. Specifically, it is possible to use a porous polymer film, for example, a porous polymer film formed of a polyolefin-based polymer such as an ethylene homopolymer, a propylene homopolymer, an ethylene/butene copolymer, an ethylene/hexene copolymer, and an ethylene/methacrylate copolymer, or a laminated structure of two or more layers thereof. In addition, a typical porous non-woven fabric, for example, a non-woven fabric made of a glass fiber having a high melting point, a polyethylene terephthalate fiber, and the like may also be used. Furthermore, a coated separator including a ceramic component or a polymeric material may be used to secure heat resistance or mechanical strength and may be selectively used as a single-layered or multi-layered structure.

Examples of the electrolyte include an organic liquid electrolyte, an inorganic liquid electrolyte, a solid polymer electrolyte, a gel-type polymer electrolyte, a solid inorganic electrolyte, a molten-type inorganic electrolyte, and the like, which can be used in the preparation of a lithium secondary battery, but are not limited thereto.

Specifically, the electrolyte may include a non-aqueous organic solvent and a metal salt.

As the non-aqueous organic solvent, it is possible to use, for example, an aprotic organic solvent, such as N-methyl-2-pyrrolidinone, propylene carbonate, ethylene carbonate, butylene carbonate, dimethyl carbonate, diethyl carbonate, γ-butyrolactone, 1,2-dimethoxy ethane, tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate.

In particular, among the carbonate-based organic solvents, cyclic carbonates ethylene carbonate and propylene carbonate may be preferably used because the cyclic carbonates have high permittivity as organic solvents of a high viscosity and thus dissociate a lithium salt well, and such cyclic carbonates may be more preferably used since the cyclic carbonate may be mixed with a linear carbonate of a low viscosity and low permittivity such as dimethyl carbonate and diethyl carbonate in an appropriate ratio and used to prepare an electrolyte having a high electric conductivity.
As the metal salt, a lithium salt may be used, the lithium salt is a material which is easily dissolved in the nonaqueous electrolyte, and for example, as an anion of the lithium salt, it is possible to use one or more selected from the group consisting of F⁻, Cl⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻.

In the electrolyte, for the purpose of improving the service life characteristics of a battery, suppressing the decrease in battery capacity, and improving the discharge capacity of the battery, one or more additives, such as, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride may be further included in addition to the above electrolyte constituent components.

An exemplary embodiment of the present disclosure provides a battery module including the secondary battery as a unit cell, and a battery pack including the same. The battery module and the battery pack include the secondary battery which has high capacity, high rate properties, and cycle properties, and thus, may be used as a power source of a medium-and-large sized device selected from the group consisting of an electric vehicle, a hybrid electric vehicle, a plug-in hybrid electric vehicle, and a power storage system.

In an exemplary embodiment of the present application, the lithium secondary battery is a cylindrical battery.

According to one example, the cylindrical battery means that the form of the battery itself, which includes an assembly including a positive electrode, a negative electrode, a separator and an electrolyte, is cylindrical, and specifically, may be composed of a cylindrical can, a battery assembly provided inside the cylindrical can, and a top cap.

In an exemplary embodiment of the present application, a battery module including the lithium secondary battery is provided.

In an exemplary embodiment of the present application, a battery pack including the battery module according to the above-described exemplary embodiment is provided.

A further exemplary embodiment of the present disclosure provides a battery module including the above-described cylindrical battery as a unit cell and a battery pack including the same. The battery module and the battery pack include the secondary battery which has high capacity, high rate properties, and cycle properties, and thus, may be used as a power source of a medium-and-large sized device selected from the group consisting of an electric vehicle, a hybrid electric vehicle, a plug-in hybrid electric vehicle, and a power storage system.

Since the lithium secondary battery according to exemplary embodiments of the present disclosure stably exhibits excellent discharge capacity, output characteristics, and cycle performance, the lithium secondary battery may be used as a power source for portable devices such as mobile phones, notebook-sized computers and digital cameras, and medium-and-large sized devices selected from the group consisting of electric vehicles, hybrid electric vehicles, plug-in hybrid electric vehicles, and power storage systems. For example, the battery module or battery pack may be used as a power source for one or more medium-and-large sized devices of a power tool; an electric vehicle including an electric vehicle (EV), a hybrid electric vehicle and a plug-in hybrid electric vehicle (PHEV); and a power storage system.

Hereinafter, preferred embodiments will be suggested to facilitate understanding of the present disclosure, but the embodiments are only provided to illustrate the present disclosure, and it is apparent to those skilled in the art that various alterations and modifications are possible within the scope and technical spirit of the present disclosure, and it is natural that such alterations and modifications also fall within the accompanying claims.

### Mode for carrying out the invention

### <Preparation Examples>

### <Example 1>

### Manufacture of negative electrode

A negative electrode composition including 15 parts by weight of Si/C, 85 parts by weight of graphite (artificial graphite:natural graphite = 80:20 weight ratio), and 0.001 parts by weight of single-walled carbon nanotubes based on 100 parts by weight of the total content of a negative electrode active material in the negative electrode composition, including 2.5 parts by weight of styrenebutadiene rubber (SBR) as a binder and 1.1 parts by weight of carboxymethyl cellulose (CMC), and further including 0.108 parts by weight of a CNT pre-dispersion including 0.06 parts by weight of a dispersant and 0.04 parts by weight of single-walled CNTs, based on 100 parts by weight of the negative electrode composition was prepared. In this case, in the composition, the artificial graphite, natural graphite and silicon carbon composite were prepared to have an average particle diameter (D50) of 12.4 µm, 11.4 µm, and 9.39 µm, respectively.

After the silicon carbon composite, graphite, and carboxymethyl cellulose (CMC) and styrene-butadiene rubber (SBR) as binders were added to a dispersion of single-walled carbon nanotubes using distilled water as a dispersion medium and carboxymethyl cellulose (CMC) as a dispersant, the resulting mixture was stirred, and then a negative electrode composition was prepared by adding distilled water thereto (solid content = 50 weight%).

The negative electrode composition was applied to a copper (Cu) metal thin film which is a negative electrode current collector having a thickness of 15 µm and dried.

In this case, the temperature of the circulating air was 60°C. Subsequently, a negative electrode in which the negative electrode active material layer was disposed on the negative electrode current collector was prepared by roll pressing the negative electrode current collector and drying the negative electrode current collector in a vacuum oven at 130°C for 12 hours.

In this case, in the CMCs, the weight of the CMC added as the binder : the weight of the CMC added as the dispersant = 1.14 : 0.06. In the negative electrode active material layer, a single body of the single-walled carbon nanotube had an average length of 10 µm, and an average diameter of 2 nm.

The negative electrode was manufactured in the same manner as in Example 1, except that the average particle diameter was adjusted as shown in the following Table 1.

**[Table 1]**

| | Silic on-based activ e material (µm) | Artificial graphite (µm) | Natural graphite (µm) | Absolute value of a ratio of a difference in average particle diameters between silicon-based active material and artificial graphite (%) (with respect to artificial graphite) | Absolute value of a ratio of a difference in average particle diameters between artificial graphite and natural graphite (%) (with respect to artificial graphite) |
|---|---|---|---|---|---|
| Example 1 | 9.39 | 12.4 | 11.4 | 24.27% | 8.06% |
| Example 2 | 9.39 | 12.4 | 12.0 | 24.27% | 3.22% |
| Example 3 | 9.86 | 12.4 | 11.4 | 20.48% | 8.06% |
| Example 4 | 9.86 | 12.4 | 12.0 | 20.48% | 3.22% |
| Example 5 | 9.15 | 10.8 | 10.1 | 15.28% | 6.48% |
| Example 6 | 10.0 | 13.0 | 12.4 | 23.08% | 4.62% |
| Comparative Example 1 | 9.39 | 16.8 | 17 | 44.11% | 1.19% |
| Comparative Example 2 | 9.39 | 16.8 | 11.4 | 44.11% | 32.14% |
| Comparative Example 3 | 9.39 | 12.4 | 17 | 24.27% | 37.10% |
| Comparative Example 4 | 6.53 | 12.4 | 11.4 | 47.34% | 8.06% |

### (2) Manufacture of positive electrode

As a positive electrode active material (Li(NiₐCo_{b}Mn_{c})O₂), NCM except for lithium (Li) and oxygen (O₂) having a ratio of Ni:Co:Mn = 60/10/30 (satisfying a ratio (a:b:c = 0.60:0.10:0.30)), a positive electrode conductive material (LB.CNT), and a binder (PVdF) were added at a weight ratio of 97.0:1.56:1.44 to a solvent (N-methylpyrrolidone, NMP) to prepare a positive electrode slurry. A positive electrode was manufactured by applying the positive electrode slurry to an aluminum (Al) thin film, which is a positive electrode current collector having a thickness of 12 µm, drying the aluminum (Al) thin film, and then rolling the dried aluminum (Al) thin film by a roll press.

### (3) Manufacture of secondary battery

An electrode assembly was manufactured by interposing a pressure-resistant thin film separator (PE 9 µm) ceramic coating 3 µm/3 µm between the positive electrode and the negative electrode. After the electrode assembly was placed inside a case, an electrolyte was injected into the case to manufacture a lithium secondary battery.

### <Experimental Example>

### Cell resistance evaluation and service life evaluation

For the manufactured battery, the internal resistance of the battery was evaluated, and is shown in the following Table 2. For the 1st and 2nd cycles, the battery was charged and discharged at 0.1 C, and for the 3rd and 4th cycles, the battery was charged and discharged at 0.33 C. Thereafter, after the battery was partially charged at SOC 50% based on the discharge capacity of the 4th cycle, a discharge current of 2.5 C was applied, and then the internal resistance of the battery was calculated through the voltage change (HPPC test).

Further, for the manufactured battery, the service life performance of the battery was evaluated, and is shown in the following Table 2. Each battery was charged and discharged at a charge rate of 3.0 C and a discharge rate of 0.5 C at 45°C.

The following Table 2 shows a comparison of the internal resistances of the batteries in Examples 1 to 6 and Comparative Examples 1 to 4. This relatively describes the internal resistances of the batteries corresponding to Comparative Examples 1 to 4 when the internal resistance of the battery corresponding to Example 1 is set to 1.0.

**[Table 2]**

| | Example 1 | Example 2 | Example 3 | Example 4 | Example 5 | Example 6 | Comparative Example 1 | Comparative Example 2 | ComparativeExample 3 | ComparativeExample 4 |
|---|---|---|---|---|---|---|---|---|---|---|
| Battery internal resistance | 1.00 | 0.99 | 0.98 | 0.98 | 0.96 | 0.99 | 1.07 | 1.03 | 1.17 | 1.01 |
| Service life (300 cycle @ 45°C ,%) | 96.1 | 96.2 | 96.1 | 96.3 | 96.5 | 96.0 | 94.6 | 94.8 | 93.9 | 95.5 |

In the case of Examples 1 to 6 according to the present application, it can be seen that the average particle diameters of the silicon-based active material and the graphite-based active material are limited to the ranges of the present application, the silicon-based active material has a smaller particle diameter than the graphite-based active material, and when the negative electrode slurry is mixed and the electrode is coated with the mixture in a state in which there is a difference in particle diameter, a phenomenon in which the silicon-based active material, which has a smaller particle diameter than the graphite-based active material, locally forms clusters is controlled. Furthermore, even in the case of natural graphite and artificial graphite in the graphite-based active material, the average particle diameter is adjusted as in Examples 1 to 6, and it could be seen that the active material in the electrode is uniformly dispersed by adjusting the corresponding average particle diameter, so that local stress generation, reaction acceleration, and deterioration during the operation process of a battery can be prevented, and an electrode in which the active material is uniformly dispersed can be manufactured.

Specifically, in the case of Example 2, the absolute value of a ratio of a difference (%) in the average particle diameters between the artificial graphite and natural graphite decreased compared to Example 1, and in the case of Example 3, the absolute value of a ratio of a difference (%) in the average particle diameters between the silicon-based active material and artificial graphite decreased compared to Example 1, and in the case of Example 4, both cases decreased compared to Example 1. In such cases, when comparing Examples, the smaller the absolute values of a ratio of a difference, the smaller the increase in internal resistance and the longer the lifespan tends to be.

Similarly, in Examples 5 and 6, the average particle diameters of the silicon-based active material and graphite (artificial graphite, natural graphite) were partially changed, and it was confirmed that the effect was superior to that of the comparative examples when the absolute value of a ratio of a difference in average particle diameter of the present disclosure was satisfied.

Comparative Examples 1 and 4 correspond to the case where the absolute value of a ratio of a difference in size of the average particle diameter (D50) between the silicon-based active material and the graphite (artificial graphite) is more than 40%, and Comparative Examples 2 and 3 correspond to the case where the absolute value of a ratio of a difference in size of the average particle diameter (D50) between the natural graphite and the artificial graphite is more than 10%.

Specifically, Comparative Examples 1 and 4 are cases where the absolute value of a ratio of a difference in average particle diameter between silicon-based active material and artificial graphite exceeds the scope of the present application, in which case silicon-based active materials with relatively small particle sizes form clusters in the graphite, causing local unevenness. Afterwards, when charge and discharge are repeated, it was confirmed that the volume of silicon-based active materials forming clusters significantly changes, increasing internal resistance and reducing the lifespan.

In Comparative Examples 2 and 3, the absolute value of a ratio of a difference in the average particle diameter (D50) between natural graphite and artificial graphite is also more than 10%, indicating that the difference in particle size between each active material is large compared to Comparative Examples 1 and 4. This is a case where, in addition to the non-uniformity of the silicon-based active material that occurred in Comparative Examples 1 and 4, non-uniform distribution also occurred between natural graphite and artificial graphite. It was confirmed that each active material formed a cluster, resulting in relatively high internal battery resistance and deteriorated lifespan.

Finally, it could be confirmed that the active material in the electrode was not uniformly dispersed, and accordingly, the internal resistance of the battery was increased. This can be confirmed again in a high-speed charging cycle performed at 45°C, and it was confirmed that Examples, which satisfies the above conditions, exhibited excellent service life performance compared to Comparative Examples 1 to 4.

## Claims

1. A negative electrode active material comprising:
a silicon-based active material; and
graphite,
wherein the graphite comprises natural graphite and artificial graphite,
an absolute value of a ratio of a difference in an average particle diameter (D50) between the natural graphite and the artificial graphite with respect to the average particle diameter of artificial graphite is 10% or less, and
an absolute value of a ratio of a difference in an average particle diameter (D50) between the silicon-based active material and the artificial graphite with respect to the average particle diameter of artificial graphite is 40% or less.

2. The negative electrode active material of claim 1, wherein the silicon-based active material has the average particle diameter (D50) of 1 µm or more and 10 µm or less, and
the graphite has the average particle diameter (D50) of 5 µm or more and 20 µm or less.

3. The negative electrode active material of claim 1, wherein the natural graphite has the average particle diameter (D50) of 5 µm or more and 20 µm or less, and
the artificial graphite has the average particle diameter (D50) of 5 µm or more and 20 µm or less.

4. The negative electrode active material of claim 1, wherein a weight ratio of the silicon-based active material to the graphite in the negative electrode active material is 5:95 to 40:60, based on 100 parts by weight of the negative electrode active material.

5. The negative electrode active material of claim 1, wherein a weight ratio of the artificial graphite to the natural graphite is 60:40 to 80:20, based on 100 parts by weight of the graphite.

6. The negative electrode active material of claim 1, wherein the silicon-based active material comprises one or more selected from the group consisting of Si, SiOx, wherein 0<x<2, Si/C, and a Si alloy.

7. The negative electrode active material of claim 1, wherein the absolute value of a ratio of a difference in the average particle diameter (D50) between the natural graphite and the artificial graphite with respect to the average particle diameter of the artificial graphite is 1% or more and 10% or less.

8. The negative electrode active material of claim 1, wherein the absolute value of a ratio of a difference in the average particle diameter (D50) between the silicon-based active material and the artificial graphite with respect to the average particle diameter of the artificial graphite is 20% or more and 40% or less.

9. The negative electrode active material of claim 1, wherein the average particle diameter (D50) of the artificial graphite is larger than the average particle diameter (D50) of the natural graphite, and the average particle diameter (D50) of the natural graphite is larger than the average particle diameter (D50) of the silicon-based active material.

10. A negative electrode for a lithium secondary battery, the negative electrode comprising:
a negative electrode current collector layer; and
a negative electrode active material layer provided on one surface or both surfaces of the negative electrode current collector layer,
wherein the negative electrode active material layer comprises the negative electrode active material according to anyone of claims 1 to 9.

11. The negative electrode of claim 10, wherein the negative electrode current collector layer has a thickness of 1 µm or more and 100 µm or less, and
the negative electrode active material layer has a thickness of 5 µm or more and 500 µm or less.

12. The negative electrode of claim 10, wherein the negative electrode active material layer further comprises:
a negative electrode conductive material; and
a negative electrode binder.

13. The negative electrode of claim 10, wherein the negative electrode active material is comprised in an amount of 90 parts by weight or more based on 100 parts by weight of the composition included in the negative electrode active material layer.

14. The negative electrode of claim 12, wherein the negative electrode conductive material is comprised in an amount of 0.1 parts by weight or more and 5 parts by weight or less based on 100 parts by weight of the composition included in the negative electrode active material layer, and
the negative electrode binder is comprised in an amount of 1 part by weight or more and 10 parts by weight or less based on 100 parts by weight of the composition included in the negative electrode active material layer.

15. A lithium secondary battery comprising:
a positive electrode;
the negative electrode according to claim 10;
a separator between the positive electrode and the negative electrode; and
an electrolyte.
